(19) **Europäisches Patentamt**

**European Patent Office**

**Office européen des brevets**

(11) **EP 1 422 980 B1**

(12) **EUROPÄISCHE PATENTSCHRIFT**

(45) Veröffentlichungstag und Bekanntmachung des Hinweises auf die Patenterteilung:
**06.09.2006 Patentblatt 2006/36**

(51) Int Cl.:
**H05B 41/292** (2006.01)

(21) Anmeldenummer: **03025459.3**

(22) Anmeldetag: **05.11.2003**

(54) **Betriebsverfahren und System für den Resonanzbetrieb von Hochdrucklampen im longitudinalen Mode**

Operating method and system for resonance mode operation of high-pressure lamps in longitudinal mode

Procédé de fonctionnement et système pour le fonctionnement en mode de resonance de lampes à haute pression dans mode longitudinal

(84) Benannte Vertragsstaaten:
**AT BE BG CH CY CZ DE DK EE ES FI FR GB GR HU IE IT LI LU MC NL PT RO SE SI SK TR**

(30) Priorität: **19.11.2002 DE 10253904**

(43) Veröffentlichungstag der Anmeldung:
**26.05.2004 Patentblatt 2004/22**

(73) Patentinhaber: **Patent-Treuhand-Gesellschaft für elektrische Glühlampen mbH 81543 München (DE)**

(72) Erfinder:
• **Kästle, Herbert**
  **83278 Traunstein (DE)**
• **Stockwald, Klaus Dr.**
  **81543 München (DE)**

(56) Entgegenhaltungen:
**US-A1- 2002 041 165        US-B1- 6 184 633
US-B1- 6 400 100**

## Beschreibung

### Technisches Gebiet

Die Erfindung geht aus von einem Betriebsverfahren und System für den Resonanzbetrieb von Hochdrucklampen im longitudinalen Mode gemäß dem Oberbegriff des Anspruchs 1. Es handelt sich weiterhin um ein EVG für den hochfrequenten Betrieb von Hochdruckentladungslampen, insbesondere mit keramischem Entladungsgefäß, bevorzugt mit einem Aspektverhältnis von mindestens 1,5.

### Stand der Technik

Aus der US 6 400 100 ist bereits ein Betriebsverfahren und System für den Resonanzbetrieb von Hochdrucklampen im longitudinalen Mode bekannt. Dort wird ein Verfahren zum Auffinden der zweiten longitudinalen akustischen Resonanzfrequenz angegeben. Es geht davon aus, dass beim kontinuierlichen Abfahren des den longitudinalen Modus enthaltenden Frequenzbereichs durch ein Auftreten einer relativen Brennspannungserhöhung der Lampe die Resonanzfrequenz in vertikaler Brennlage gefunden werden kann. Es zeigt sich, dass mit dieser Methode die longitudinale Frequenz für einen segregierten Bogenzustand in vertikaler Resonanz gefunden und dann beibehalten wird. Diese so gefundene Frequenz kann aber je nach Füllungszusammensetzung der Metallhalogenidfüllung und Zeitpunkt des Ablaufes der Suchprozedur deutlich zu hoch angesiedelt sein, so dass ein Anregen der akustischen Resonanz bei der mit o.g. Methode gefundenen Frequenz eine unzureichende Durchmischung ergibt und die Segregation nicht genügend gut aufhebt. Die Implementierung in ein elektronisches Vorschaltgerät ist außerdem aufwendig.

Die US 6 184 633 beschreibt ein Betriebsverfahren für Hochdruckentladungslampen, das sich mit einer Regelung der Sweepfrequenz im Dauerbetrieb der Lampe beschäftigt.

### Darstellung der Erfindung

Es ist Aufgabe der vorliegenden Erfindung, ein Betriebsverfahren gemäß dem Oberbegriff des Anspruchs 1 bereitzustellen, das eine optimale Durchmischung auch im vertikalen Betrieb sicherstellt. Eine weitere Aufgabe ist es, eine gesuchte akustische Resonanz in jeder Brennlage zuverlässig zu finden. Eine weitere Aufgabe ist es, ein zugehöriges System dafür anzugeben.

Diese Aufgabe wird durch die kennzeichnenden Merkmale des Anspruchs 1 gelöst. Besonders vorteilhafte Ausgestaltungen finden sich in den abhängigen Ansprüchen.

Das erfindungsgemäße Betriebsverfahren ist darauf ausgerichtet, von vornherein immer die zweite longitudinale Resonanz der horizontalen Brennlage im Dauerbetrieb anzuregen, weil sich damit eine optimale Durchmischung der Füllungsbestandteile, vor allem der Metallhalogenide, auch in nichthorizontaler Brennlage erreichen lässt. Somit werden Farbeffekte und Farbstreuung weitgehend vermieden. Diese muss verzögert nach Einhalten einer gewissen Karenzzeit dem System aufgeprägt werden. Diese Vorgehensweise ermöglicht ein zuverlässiges Einschwingen in die optimale Resonanz, nämlich die 2. longitudinale akustische Resonanz f002 der horizontalen Brennlage. Das Verfahren ist vor allem bei keramischen Hochdrucklampen geeignet mit einem Aspekt-Verhältnis (Länge:Durchmesser) von mindestens 1.5, bevorzugt >2 bei HF-Sweep-Betrieb zur Unterdrückung der Segregation und verbesserten Durchmischung des Metallhalogenid-Lichtbogen-Plasmas.

Es zeigt sich, dass die beste Durchmischung erfolgt, wenn auch in nichthorizontaler, insbesondere in vertikaler, Position in der Aufwärmphase zunächst bei gleichen Resonanzbedingungen angeregt wird wie die Resonanz in horizontaler Brennlage. In letzterer kann keine Segregation auftreten.

Es wird erfindungsgemäß ein verbessertes, gegenüber WO 02/09480 zuverlässigeres Verfahren vorgeschlagen, das einfacher und billiger in elektronischen Vorschaltgeräten (EVG) implementiert werden kann.

Die Lage der Resonanz f002 in horizontaler Brennlage wird als erstes ermittelt. Sie kann durch verschiedene Verfahren vorab oder online im Betrieb der Lampe erfolgen, z. B. durch Messung der Lampen-Impedanz bei Lampenbetrieb mit Rechteckstrom-Einprägung und überlagertem sinusförmigen Signal mit Amplituden-Anteil des sinusförmigen Anteiles von 5-15% bei Variation der Frequenz des Sinus-Signals.

Es wird davon ausgegangen, dass für eine vorgegebene Geometrie des Entladungsgefäßes ein enger Toleranzbereich für die Innenlänge vorliegt. Sie stellt diejenige Dimension der Lampe dar, die die 2. longitudinale akustische Resonanz definiert, welche für eine optimale Durchmischung des Bogenplasmas, insbesondere bei vertikaler Brennlage, angeregt werden muss.

In vertikaler Brennlage ergeben sich aufgrund der Entmischung stark veränderte Schallgeschwindigkeiten, die dazu führen , dass nach Hochlauf der Lampe die akustische 2. longitudinale Resonanz (f002_vert) bzgl. der horizontalen Brennlage (wie f002_hor) deutlich -- meist zu höheren Frequenzen hin -- verschoben ist. Im Laufe der Zeit ändert sich dann bei richtiger Betriebsweise, die eine allmähliche Durchmischung erreicht, diese Resonanzfrequenz, bis sie wieder derjenigen bei horizontalem Betrieb f002_hor entspricht.

Dabei zeigen sich aufgrund der sich vor allem bei vertikalem Betrieb einstellenden Segregation Abweichungen der effektiven Schallgeschwindigkeit bis zu 30 %, meist von ca. 10 bis 25 % zu höheren Werten, gegenüber dem durchmischten Zustand in horizontaler Brennlage. Beispielsweise werden Abweichungen der Schallgeschwindigkeiten bei Hg/Ar-Puffergasgemischen von ca. 15 bis 20 % gegenüber dem durchmischten Betrieb gefunden. Ein konkreter Messwert lag bei 550 m/s gegenüber 464 m/s.

Die akustische Resonanzfrequenz der i-ten longitudinalen akustischen Resonanz ist allgemein gegeben durch:

$$f_{00i} = i * cl /(2*L) \ ;$$

Für i = 2 (zweite akustische Resonanz) gilt also:: $f_{002} = cl / L$.

Der Sweep-Betrieb wird mit typischen Sweep-Raten von 100 $s^{-1}$ bis 1000 $s^{-1}$ zentriert zwischen der ersten azimuthalen und der ersten radialen akustischen Resonanz vorzugsweise rampenförmig mit ansteigender Frequenz ausgeführt.

Für azimuthale akustische Resonanzen gilt der Zusammenhang zwischen Röhrenradius R und einer effektiven (azimuthal wirksamen) Schallgeschwindigkeit $c_{az}$:

$f_{i00} = a_{i0} c_{az} /(2*\square*R)$, mit $a_{i0}$ i = 1,2,... Besselkoeffizient $a_{10}$ = 1.84 ; $a_{20}$ = 3.05 ; $a_{30}$ = 4.2 usw.

Für die radialen akustischen Resonanzen gilt der Zusammenhang zum Röhrenradius R und einer effektiven radial wirksamen Schallgeschwindigkeit $c_r$ :

$f_{0i0} = a_{0i} c_r /(2*\square*R)$ ; mit $a_{0i}$ i = 1,2,... Besselkoeffizient $a_{01}$ = 3.83 ; $a_{02}$ = 7.016 ; usw.

Zur Anregung dieser Schallresonanzen im geschlossenen , annähernd zylindrischen Lampenkolben sind die sich ausbildenden elektrischen Leistungsschwingungen maßgeblich. Das heißt,. bei Anregung mit sinusförmigen Strom-formen mit der Frequenz $f_l$ hat die Leistungsfrequenz $f_P$ die Frequenz: $f_P = 2* f_l$

Die Resonanzfrequenz der zweiten longitudinalen Resonanz ist somit gegeben durch f002 = cl / L, wobei

$$cl = (R*\kappa*T/M)^{1/2}$$

die Schallgeschwindigkeit ist mit R: allg. Gaskonstante, $\kappa$ Kompressibilität, T: mittlere Plasma-Temperatur, M: mittlere molare Masse des Plasma-Gases; L = axiale Länge des Entladungsgefäßes).

Die Erfindung geht aus von einer Trägerfrequenz im für Lampenanwendungen typischen HF-Bereich, beispielsweise 50 kHz, der eine Sweepfrequenz als FM-Modulation aufgeprägt ist, deren Wert ausgewählt ist aus einem Bereich, der sich von der ersten azimutalen bis zur ersten radialen Resonanz erstreckt. Bevorzugt ist ein Wert, der in der Nähe des Mittelwertes, insbesondere direkt beim Mittelwert, zwischen beiden Resonanzen liegt. Ein Anhaltspunkt ist ein Sweepen, das um bis zu 10 % von der Trägerfrequenz abweicht. Die Sweeprate liegt typisch im Bereich von 100 bis 1000 Hz. Diesen wird, evtl. nach Einhalten einer Karenzzeit (Aufwärmen der Lampe), eine Amplitudenmodulation aufgeprägt, deren Grundfrequenz die 2. longitudinale Resonanz f002 in horizontaler Brennlage ist.

Es zeigt sich, dass hier die Resonanzfrequenzen bei den hier benutzten Brenner-Innendimensionen (typischer Wert ist 12 bis 24 mm) um bis zu 5 kHz gegenüber der horizontalen bzw. durchmischten Bedingung verschoben sind. die hier beschriebene Vorgehensweise führt zuverlässig zur gewünschten Betriebsweise.

Mehrere Ausführungsformen eignen sich als Lösungswege zur zuverlässigen Einstellung einer bestmöglichen Durchmischung des Lichtbogenplasmas und einer weitgehenden Aufhebung der Segregation. Mehrere Betriebsverfahren zur Einstellung der eine Durchmischung am besten bewirkenden 2. horizontalen longitudinalen Resonanz f002 in beliebiger Brennlage, bevorzugt bei Sweep-Betrieb bei ca. 0,9 bis 1,1 x (f100+ f010)/2, werden hier im weiteren angegeben. Dieser Sweepbereich entspricht in etwa einem Fenster von 5 kHz (~ 10% $^x$ (f100+ f010 )/2 )) nach oben und unten.

Voraussetzung dafür ist zunächst die Bestimmung und Speicherung der Lage der 2. longitudinalen Resonanzfrequenz f002 in praktisch immer schon durchmischter horizontaler Brennlage. Zur Einstellung eines Grundbetriebes mit dieser Frequenz muss die Geometrie/Puffergas-Kombination auf die akustischen Resonanzen hin charakterisiert und untersucht werden, so dass neben der 2. longitudinalen Resonanz f002 auch die 1. azimutale Resonanz f100 und die 1. radiale Resonanz f010 bzw. deren Mittelwert bekannt sind.

Es zeigt sich, dass in einer ersten Ausführungsform eine Prozedur zum Einschwingen in den günstigsten durchmischten Betriebszustand sich dadurch realisieren lässt, dass nach dem Zünden der Bogenentladung, unter Einhaltung einer Aufwärmphase (bis Zeitpunkt t1) von 30 bis 80 sec, bevorzugt etwa 60 sec, innerhalb einer Prägungsphase von ca. >60 bis ca. 150 sec, die Grundfrequenz fAM der Amplitudenmodulation AM auf einen Wert vom 1,15 bis 1,25-fachen der Frequenz f002_hor eingestellt wird. Davor kann die AM beliebig gewählt sein, bevorzugt ist aber f002_hor voreingestellt. Auch der AM-Grad kann zuvor beliebig in einem Bereich von 0 bis 25 % eingestellt sein. Zum Zeitpunkt der Erhöhung der Grundfrequenz in der Prägungsphase, bevorzugt ist dabei eine um 18-20% erhöhte Frequenz gegenüber f002_hor, wird der AM-Grad auf 15 bis 30 % eingestellt. Bevorzugt wird dabei die Amplitudenmodulation auf ca. 15-25% Amplitudenmodulationsgrad eingestellt.

Im weiteren Verlauf der Prägungsphase erfolgt eine kontinuierliche Frequenzverschiebung der Grundfrequenz zurück zur f002_hor bei gleichbleibendem oder sich an die Dauerbetriebsbedingung angleichendem AM-Grad (18-30%, bevorzugt 20-25 %) hin zur Anregungsfrequenz, die sich in horizontaler Brennlage ergibt. Die Rate der Frequenzverschiebung der Grundfrequenz ist 0,5 bis 15 kHz, bevorzugt liegt sie bei typ. 1 kHz/sec und ist nicht schneller als 10 kHz/sec.

In einer weiteren Ausführungsform wird über eine stufenweise oder kontinuierliche Erhöhung des AM-Modulationsgrades bis auf 45% nach einer Aufwärmphase von bevorzugt ca. 75-150 sec bei festgehaltener Grundfrequenz am Frequenzpunkt f002_hor die Resonanz für die horizontale Brennlage auch in vertikaler Brennlage erzwungen. Die Rate der Erhöhung des AM-Grads soll eine bestimmte Steigerungsrate nicht überschreiten (typ. <40%/sec)

Nach einer Prägungsphase von ca.> 20-60 sec bei erhöhtem AM-Grad lässt sich der AM-Grad auf den Zustand des Dauerbetriebszustandes, nämlich von ca. 20-25%, mehr oder weniger abrupt einstellen. Die Einstellung dieses AM-Grads ist keiner Raten-Beschränkung unterworfen. Der AM-Grad kann somit instantan (innerhalb 0,1 sec) oder mit hoher Änderungsrate geändert (bevorzugt verringert) werden.

Über diese Prozedur wird ebenfalls das Erreichen der 2. horizontale longitudinale Resonanz zuverlässig erzwungen.

Die Erfindung beinhaltet auch Kombinationen dieser beiden Verfahren und die Implementierung des Verfahrens in ein Vorschaltgerät. Die Zeitbereiche bis zum Beginn der beschriebenen Prozeduren, d.h. der wirkungsvollen Änderungen der Frequenzen und AM-Grade werden durch die Leistungseinkopplung des Vorschaltgerätes in der Anlaufphase bestimmt. Die angegebenen Zeiträume können bei erhöhtem Leistungseintrag nach dem Start der Bogenentladung um bis zu 50% verkürzt werden. Bei Anwendungen mit Brennergefäßen mit hoher Wärmekapazität kann die Zeitphase auch bis 200% erhöht werden. Des weiteren können die Änderungszyklen von Frequenz und AM-Grad mehrmals durchlaufen werden.

Über automatische Messungen der Brennspannung und Impedanz der Lampe kann ein Start bzw. Abbruchkriterium für die zu betreibende Hochdruck-Lampentype definiert eingestellt werden.

Neben dem Verfahren beinhaltet die Erfindung Vorschaltgeräte, in welches die beschriebenen Prozeduren implementiert sind.

## Kurze Beschreibung der Zeichnungen

Im folgenden soll die Erfindung anhand mehrerer Ausführungsbeispiele näher erläutert werden. Es zeigen:

Figur 1    ein schematisierter Ablauf des Anlaufs einer Hochdrucklampe;
Figur 2    ein weiteres Ausführungsbeispiel für einen schematisierten Ablauf;
Figur 3    ein Ausführungsbeispiel für die prinzipielle Ansteuerschaltung

## Bevorzugte Ausführung der Erfindung

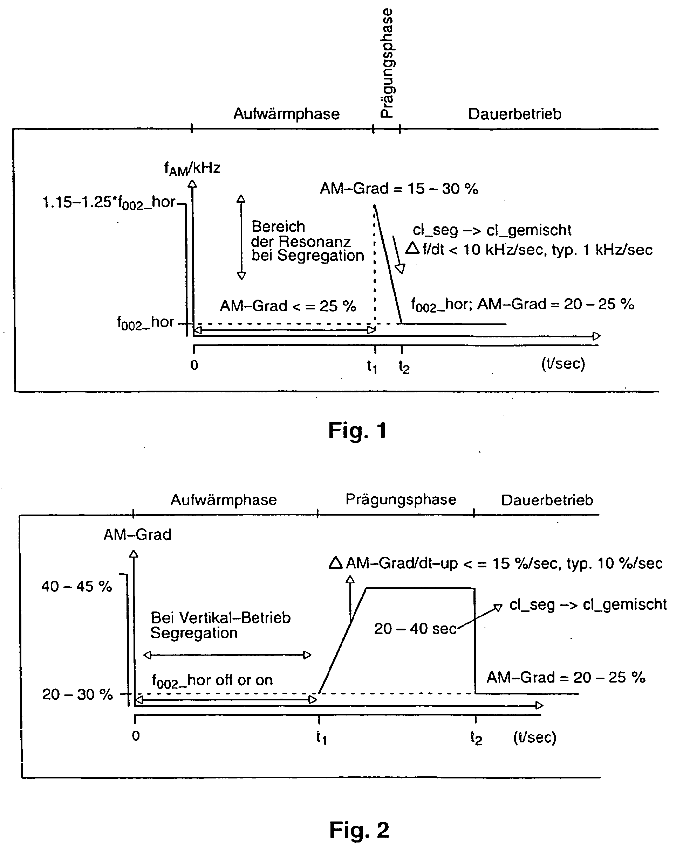

In Fig. 1 ist die schematische Betriebsprozedur zur Einstellung eines verbesserten Durchmischungszustandes bei universeller Brennlage und insbesondere bei vertikaler Brennlage mittels AM-Frequenzverschiebung in der Anlauf-Phase gezeigt. Dabei ist die Frequenz der Amplitudenmodulation fAM gegen die Zeit nach Einschalten de Lampe aufgetragen. In einer ersten Ausführungsform lässt sich eine Prozedur zum Einschwingen in den günstigsten durchmischten Betriebszustand dadurch realisieren, dass nach dem Zünden der Bogenentladung (t=0) eine Aufwärmphase (bis Zeitpunkt t1) folgt. Diese Aufwärmphase dauert maximal 75 bis 150 s, bevorzugt etwa 60 sec. In der folgenden Prägungsphase (von t1 bis t2) mit einer Zeitdauer von ca. 1 bis 2 min, wird die Grundfrequenz fAM der Amplitudenmodulation AM auf einen Wert vom 1,15 bis 1,25-fachen der Frequenz f002_hor eingestellt. Davor, in der Aufwärmphase, kann die Frequenz fAM beliebig gewählt sein, bevorzugt ist aber f002_hor voreingestellt. Auch der AM-Grad kann in der Aufwärmphase beliebig in einem Bereich von 0 bis 25 % eingestellt sein. danach wird die Grundfrequenz zum Zeitpunkt t1 schlagartig erhöht, bevorzugt ist dabei eine um 18-20% erhöhte Frequenz gegenüber f002_hor. Zum Zeitpunkt der Erhöhung der Grundfrequenz in der Prägungsphase, wird der AM-Grad auf 15 bis 30 % eingestellt. Bevorzugt wird dabei die Amplitudenmodulation auf ca. 15-25%, bevorzugt auf 20 bis 25 %, Amplitudenmodulationsgrad eingestellt.

Im weiteren Verlauf der Prägungsphase erfolgt eine kontinuierliche Absenkung der Grundfrequenz fAM zurück zu f002_hor bei gleichbleibendem oder sich an die Dauerbetriebsbedingung angleichende AM-Grad (18-30%, bevorzugt 20-25 %) hin zur Anregungsfrequenz, die sich in horizontaler Brennlage ergibt. Die Rate der Frequenzverschiebung der Grundfrequenz ($\Delta f/dt$) ist 0,5 bis 15 kHz/sec, bevorzugt liegt sie bei typ. 1 kHz/sec und ist nicht schneller als 10 kHz/sec.

In Fig. 2 ist eine alternative schematische Betriebsprozedur zur Einstellung eines verbesserten Durchmischungszustandes bei universeller Brennlage und insbesondere bei vertikaler Brennlage mittels Änderung des AM-Modulations-Grads in der Anlauf-Phase gezeigt. Nach einer Aufwärmphase bis zum Zeitpunkt t1 (bevorzugt ca. 75-150 sec) bei festgehaltener Grundfrequenz am Frequenzpunkt f002_hor (oder ganz ohne Amplitudenmodulation) mit einem AM-Grad von weniger als 30 % wird über eine stufenweise oder kontinuierliche Erhöhung des AM-Modulationsgrades bis auf 45% die Resonanz für die horizontale Brennlage auch in vertikaler Brennlage erzwungen. Die Rate der Erhöhung des AM-Index soll eine Steigerungsrate von 15 %/sec nicht überschreiten (typ. sind 10%/sec)

Nach einer Prägungsphase von insgesamt 20 bis 60 sec bei erhöhtem AM-Grad lässt sich der AM-Grad mehr oder weniger abrupt auf den Zustand des Dauerbetriebszustandes, nämlich von ca. 20-25%, einstellen. Die Einstellung dieses AM-Grads ist keiner Raten-Beschränkung unterworfen. Der AM-Grad kann somit instantan (innerhalb 0,1 sec) oder mit hoher Änderungsrate geändert (bevorzugt verringert) werden.

Über diese Prozedur wird ebenfalls das Erreichen der 2. horizontale longitudinale Resonanz zuverlässig erzwungen.

In einem ersten Ausführungsbeispiel der Lampe besitzt diese ein keramisches Entladungsgefäß mit den Füllungskomponenten Jodiden von Natrium, Cer und Calcium im Verhältnis Na! : $CeI_3$ : $CaI_2$ = 70: 10: 20 mol-% mit Gesamtmasse von 5 mg und eine Hg-Füllung von 4.5 mg.

Das Entladungsgefäß hat eine Innenabmessung (Innenlänge) von IL = 19.2 mm und einen Innendurchmesser ID = 4 mm und ist im wesentlichen zylindrisch über den Elektrodenabstand EA = 15 mm. Die Lampe wird mit einer Leistung von 70W betrieben. Bei Vertikal-Betrieb wird die Lampe nach der Zündung für 90 sec im Sweep-Betrieb zwischen 45-55 kHz mit einer Sweep-Rate von 85 Hz betrieben.

Nach dieser Aufwärmphase wird eine Amplitudenmodulation von ca. 20% AM-Grad bei einer Frequenz von ca. 30 kHz aufgeprägt. Im weiteren Zeitverlauf wird mit einer Änderungsgrate von ca. 1kHz / sec die Frequenz auf die zuvor in horizontaler Brennlage bestimmte Resonanzfrequenz der 2. longitudinalen akustischen Eigenschwingung von 24,4 kHz bei gleichbleibendem Amplitudenmodulationsgrad verschoben. Die Prozedurdauer beträgt ca. 5.6 sec. Für den weiteren Betrieb wird der Frequenzpunkt der Amplitudenmodulation und der Modulationsgrad beibehalten. Die Durchmischung ergibt eine Änderung der Farbtemperatur von 4370K auf 3150 K bei einer Änderung der Lampenlichtausbeute von 95 auf 125 lm/W.

Die gleiche Lampe wie in Beispiel 1 wird im zweiten Ausführungsbeispiel unterschiedlich in die 2. longitudinale Resonanz abgestimmt. Nach wiederum 90 sec Aufwärmphase wird schrittweise in 5 % -Schritten der AM-Grad in Werten von ca. 5% pro sec innerhalb von 8 sec auf ein AM-Grad-Niveau von 40% an der bestimmten Frequenzstelle für die in horizontaler Brennlage relevante 2. longitudinale Resonanzfrequenz von 24.4 kHz erhöht und dort typischerweise für ca. 15 -20 sec festgehalten. Nach dieser Phase wird der AM-Grad abrupt (innerhalb von ca. 0.1 sec )auf 20% abgesenkt. Die Prozedurdauer beträgt ca. 23-28 sec.

Die Lampeneigenschaften im Dauerbetrieb unterscheiden sich nicht von Beispiel 2.

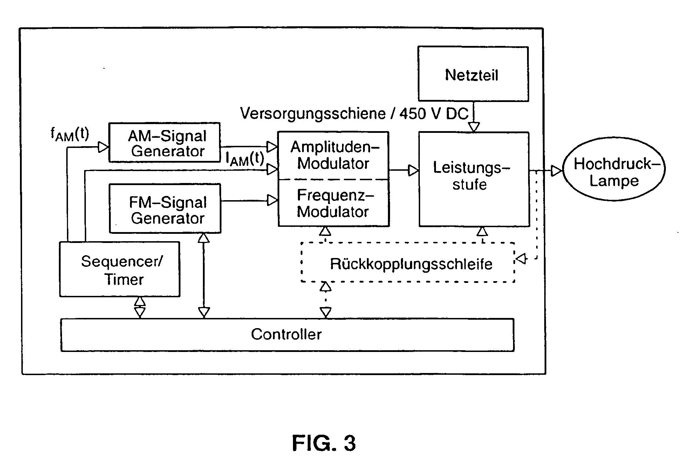

In Fig. 3 ist ein Prinzipschaltbild eines zugehörigen EVGs gezeigt. Es weist folgende essentielle Komponenten auf :

Timer/Sequencer: Hier erfolgt die Zeitschema-Kontrolle zur Steuerung der Zeitdauer der Aufwärmphase und Einsetzen der Prägephase nach Zünden und Bogenübernahme der Hochdrucklampe. Hier erfolgt außerdem die Steuerung der Sweep-Rate für die Lampenbogen-Stabilisierung.

Power stage (Leistungsendstufe): Voll- oder Halbbrücke mit strombegrenzenden Elementen und typischen Frequenzgang. Sie ist über eine Versorgungsschiene (450 V DC) an das Netzteil gekoppelt)

Feed-back-Loop (Rückkopplungsschleife): Betriebserkennung der Lampe evtl. Rückkopplung von Lampenparametern wie Lampenstrom und Lampenspannung zur Einstellung der Steuerparameter und Festlegung von Aufwärm- bzw. Prägephase, bzw. Wiederholung von Prägephasen mit anderen Abstimmparametern.

Lampe: Hochdruck-Entladungslampe (HID lamp)

FM-Modulator: Hochleistungsfrequenzmodulator

AM-Modulator: Analoger Hochleistungsmodulator mit Möglichkeit der Modulation sowohl in Frequenz als auch im AM-Grad $I_{AM}$

AM-Signal-Generator: Digital oder Spannungskontrollierter Oszillator

FM-Signal Generator: Digital oder Spannungskontrollierter Oszillator

Power Supply (Netzteil): Rail Voltage Generator

Controller: Zentrale Kontrolle aller Einheiten

**Patentansprüche**

1. Betriebsverfahren für den Resonanzbetrieb von Hochdrucklampen im longitudinalen Mode, unter Benutzung einer hochfrequenten Trägerfrequenz, die mittels Sweepsignalgenerator frequenzmoduliert wird, wobei die Frequenz des Sweepsignals von den ersten azimutalen und radialen Modi abgeleitet wird, und die gleichzeitig amplitudenmoduliert AM wird, wobei ein Controller die Grundfrequenz des AM-Signals einstellt, wobei die Grundfrequenz der AM vom zweiten longitudinalen Mode abgeleitet wird, **dadurch gekennzeichnet, dass** nach dem Zünden der Lampe nacheinander drei Betriebszustände durchlaufen werden:

    a) Aufwärmphase, mit beliebiger Grundfrequenz fAM der AM, wobei bevorzugt entweder die zweite longitudinale Resonanz in horizontaler Brennlage, abgekürzt f002_hor als Grundfrequenz der AM gewählt wird, so dass gilt fAM = f002 hor oder auf eine AM verzichtet wird, so dass gilt fAM = 0;
    b) Prägungsphase, die sich durch eine zeitlich sich ändernde AM mit einem von Null verschiedenen AM-Grad auszeichnet, wobei fAM > f002 hor gewählt ist;
    c) Dauerbetrieb mit konstanten Bedingungen der AM, bei dem die f002_hor als Grundfrequenz fAM der AM eingestellt ist, so dass gilt fAM = f002_hor, und der AM-Grad bei 20 bis 25 % liegt.

2. Betriebsverfahren nach Anspruch 1, **dadurch gekennzeichnet, dass** die Sweepfrequenz im Betrieb konstant gehalten wird und im Bereich zwischen dem ersten azimutalen und radialen Mode liegt.

3. Betriebsverfahren nach Anspruch 1, **dadurch gekennzeichnet, dass** die Aufwärmphase etwa 30 bis 80 sec dauert, während die Prägungsphase etwa 60 bis 150 sec dauert.

4. Betriebsverfahren nach Anspruch 1, **dadurch gekennzeichnet, dass** während der Prägungsphase die Grundfrequenz der AM um 15 bis 25 % abrupt erhöht wird und dann kontinuierlich mit einer Änderungsrate von 0,5 bis 15 kHz/sec auf den ursprünglichen Wert f002_hor zurückgeführt wird.

5. Betriebsverfahren nach Anspruch 4, **dadurch gekennzeichnet, dass** der AM-Grad im Bereich 15 bis 30 % eingestellt wird.

6. Betriebsverfahren nach Anspruch 5, **dadurch gekennzeichnet, dass** die Änderungsraten der Grundfrequenz und des AM-Grads gleich gewählt werden.

7. Betriebsverfahren nach Anspruch 1, **dadurch gekennzeichnet, dass** während der Prägungsphase der AM-Grad um 50 bis 150 % gegenüber dem AM-Grad des Dauerbetriebs hochgefahren wird, mit einer Änderungsrate von höchstens 15 % pro sec unter anschließender Beibehaltung des gewählten Höchstwertes bis zum Ende der Prägungsphase, während insbesondere die Grundfrequenz ungeändert bleibt.

8. Betriebsverfahren nach Anspruch 7, **dadurch gekennzeichnet, dass** die Phase der Beibehaltung etwa 20 bis 40 sec dauert.

9. Betriebsverfahren nach Anspruch 7, **dadurch gekennzeichnet, dass** der anschließende Übergang in den Dauerbetrieb abrupt, bevorzugt innerhalb 0,1 sec, erfolgt.

10. EVG zum hochfrequenten Betriebs einer Hochdruckentladungslampe mit einem Sweepsignalgenerator der ein einstellbares Sweepfrequenzsignal bereitstellt einem Amplitudenmodulationssignalgenerator, der ein einstellbares Amplitudenmodulationssignal mit einstellbarem Frequenzwert und einstellbarem Modulationsgrad bereitstellt einem Mischer, der mit beiden Generatoren verbunden ist, so dass das Sweepfrequenzsignal durch das Amplitudenmodulationssignal in seiner Ampitude moduliert wird, und dieses Signal dazu geeignet ist an die Lampe anaeschlossen zu werden, und einem Controller der zum Regeln der Grundfrequenz des Amplitudenmodulationssignals konfiguriert ist wobei das EVG dazu eingerichtet ist, den Betrieb der Lampe gemäß dem Betriebsverfahren nach Anspruch 1 durch Zusammenwirken der vorgenannten Komponenten durchzuführen.

**11.** System bestehend aus einem EVG gemäß Anspruch 10 und einer zugehörigen Hochdruckentladungslampe, mit einem Entladungsgefäß, das Metallhalogenide enthält **dadurch gekennzeichnet, dass** das Aspektverhältnis des Entladungsgefäßes größer als 1,5 ist.

**Claims**

**1.** Operating method for the resonant operation of high-pressure lamps in longitudinal mode, using a high-frequency carrier frequency that is frequency-modulated by means of a sweep signal generator, the frequency of the sweep signal being derived from the first azimuthal and radial modes and being simultaneously amplitude-modulated AM, a controller setting the fundamental frequency of the AM signal, the fundamental frequency of the AM being derived from the second longitudinal mode, **characterized in that** after the ignition of the lamp three operating states are passed through sequentially:

 a) a warm-up phase with an arbitrary fundamental frequency fAM of the AM, it being preferred that either the second longitudinal resonance in horizontal operating position, abbreviated f002_hor, is selected as fundamental frequency of the AM so that fAM = f002_hor holds, or an AM is dispensed with so that fAM = 0 holds;
 b) an impressing phase that is distinguished by a temporally changing AM having an AM degree different from zero, fAM > f002_hor being selected; and
 c) a continuous operation with constant conditions of the AM, in the case of which the f002_hor is set as fundamental frequency fAM of the AM, so that fAM = f002_hor, holds and the AM degree is at 20 to 25%.

**2.** Operating method according to Claim 1, **characterized in that** the sweep frequency is kept constant during operation and is in the range between the first azimuthal and radial mode.

**3.** Operating method according to Claim 1, **characterized in that** the warm-up phase lasts approximately 30 to 80 seconds, while the impressing phase lasts approximately 60 to 150 seconds.

**4.** Operating method according to Claim 1, **characterized in that** during the impressing phase the fundamental frequency of the AM is raised abruptly by 15 to 25% and then returned continuously to the original value f002_hor at a rate of change of 0.5 to 15 kHz/sec.

**5.** Operating method according to Claim 4, **characterized in that** the AM degree is set in the range of 15 to 30%.

**6.** Operating method according to Claim 5, **characterized in that** the rates of change of the fundamental frequency and AM degree are selected to be equal.

**7.** Operating method according to Claim 1, **characterized in that** during the impressing phase the AM degree is stepped up by 50 to 150% by comparison with the AM degree of the continuous operation, at a rate of change of at most 15% per second, followed by maintaining of the selected highest value up to the end of the impressing phase while, in particular, the fundamental frequency remains unchanged.

**8.** Operating method according to Claim 7, **characterized in that** the maintaining phase lasts approximately 20 to 40 seconds.

**9.** Operating method according to Claim 7, **characterized in that** the following transition to the continuous operation is performed abruptly, preferably within 0.1 seconds.

**10.** Electronic ballast for high-frequency operation of a high-pressure discharge lamp, having a sweep signal generator which provides a settable sweep frequency signal, an amplitude modulation signal generator which provides a settable amplitude modulation signal with a settable frequency value and settable modulation depth, a mixer which is connected to both generators so that the amplitude of the sweep frequency signal is modulated by the amplitude modulation signal and this signal is suitable for being connected to the lamp, and a controller which is configured for regulating the fundamental frequency of the amplitude modulation signal, the electronic ballast being set up to carry out the operation of the lamp in accordance with the operating method according to Claim 1 through cooperation of the above named components.

**11.** System composed of an electronic ballast according to Claim 10 and an associated high-pressure discharge lamp, having a discharge vessel that contains metal halides, **characterized in that** the aspect ratio of the discharge vessel is greater than 1.5.

**Revendications**

1. Procédé pour faire fonctionner en résonance des lampes à haute pression en mode longitudinal, utilisant une fréquence porteuse à haute fréquence qui est modulée en fréquence au moyen d'un générateur de signal de balayage, la fréquence du signal de balayage étant déduite des premiers modes azimutal et radial, et qui est simultanément modulée en amplitude AM, un contrôleur réglant la fréquence fondamentale du signal de modulation d'amplitude AM, la fréquence fondamentale de la modulation d'amplitude AM étant déduite du deuxième mode longitudinal, **caractérisé par le fait que**, après l'allumage de la lampe, on passe successivement par les trois états de fonctionnement ci-dessous :

   a) phase de réchauffage, avec fréquence fondamentale quelconque fAM de la modulation d'amplitude AM, de préférence soit la deuxième résonance longitudinale en position de fonctionnement horizontale, abrégée en f002_hor, est choisie comme fréquence fondamentale de la modulation d'amplitude AM de manière à avoir fAM = f002_hor, soit on renonce à une modulation d'amplitude AM de manière à avoir fAM = 0 ;
   b) phase d'application qui se **caractérise par** une modulation d'amplitude AM variable dans le temps avec un taux de modulation d'amplitude AM différent de 0, fAM > f002_hor étant choisie ;
   c) fonctionnement permanent avec des conditions constantes de la modulation d'amplitude AM, f002_hor étant réglée comme fréquence fondamentale fAM de la modulation d'amplitude AM de manière à avoir fAM = f002_hor et le taux de modulation d'amplitude AM étant de 20 à 25 %.

2. Procédé de fonctionnement selon la revendication 1, **caractérisé par le fait que** la fréquence de balayage est maintenue constante au cours du fonctionnement et se situe dans la plage comprise entre le premier mode azimutal et le premier mode radial.

3. Procédé de fonctionnement selon la revendication 1, **caractérisé par le fait que** la phase de réchauffage dure 30 à 80 secondes environ tandis que la phase d'application dure 60 à 150 secondes environ.

4. Procédé de fonctionnement selon la revendication 1, **caractérisé par le fait que**, pendant la phase d'application, la fréquence fondamentale de la modulation d'amplitude AM est brusquement augmentée de 15 à 25 % puis est ramenée de façon continue à la valeur initiale f002_hor avec un taux de variation de 0,5 à 15 kHz/s.

5. Procédé de fonctionnement selon la revendication 4, **caractérisé par le fait que** le taux de modulation d'amplitude AM est réglé dans une plage comprise entre 15 et 30 %.

6. Procédé de fonctionnement selon la revendication 5, **caractérisé par le fait que** les taux de variation de la fréquence fondamentale et du taux de modulation d'amplitude AM sont choisis égaux.

7. Procédé de fonctionnement selon la revendication 1, **caractérisé par le fait que**, pendant la phase d'application, le taux de modulation d'amplitude AM est relevé de 50 à 150 % par rapport au taux de modulation d'amplitude AM du fonctionnement permanent, avec un taux de variation au maximum de 15 % par seconde en conservant ensuite la valeur maximale choisie jusqu'à la fin de la phase d'application tandis que la fréquence fondamentale en particulier reste inchangée.

8. Procédé de fonctionnement selon la revendication 7, **caractérisé par le fait que** la phase de la conservation dure 20 à 40 secondes environ.

9. Procédé de fonctionnement selon la revendication 7, **caractérisé par le fait que** la transition consécutive vers le fonctionnement permanent s'effectue brusquement, de préférence en 0,1 seconde.

10. Ballast électronique pour le fonctionnement à haute fréquence d'une lampe à décharge à haute pression, avec un générateur de signal de balayage qui fournit un signal de fréquence de balayage réglable, avec un générateur de signal de modulation d'amplitude qui fournit un signal de modulation d'amplitude réglable avec valeur de fréquence réglable et avec taux de modulation réglable, avec un mélangeur qui est relié aux deux générateurs de telle sorte que le signal de fréquence de balayage est modulé en amplitude par le signal de modulation d'amplitude et que ce signal convient pour un raccordement à la lampe et avec un contrôleur qui est configuré pour régler la fréquence fondamentale du signal de modulation d'amplitude, le ballast électronique étant conçu pour mettre en oeuvre le fonctionnement de la lampe selon le procédé de fonctionnement selon la revendication 1 grâce à une coopération des éléments mentionnés ci-dessus.

11. Système, constitué d'un ballast électronique selon la revendication 10 et d'une lampe à décharge à haute pression associée, avec une enceinte de décharge qui contient de l'halogénure métallique, **caractérisé par le fait que** le rapport d'aspect de l'enceinte de décharge est supérieur à 1,5.

Prägungsphase

Aufwärmphase     Dauerbetrieb

$f_{AM}/kHz$

$1.15–1.25 \cdot f_{002\_hor}$

AM–Grad = 15 – 30 %

Bereich
der Resonanz
bei Segregation

cl_seg –> cl_gemischt
$\Delta f/dt < 10$ kHz/sec, typ. 1 kHz/sec

AM–Grad < = 25 %

$f_{002\_hor}$; AM–Grad = 20 – 25 %

$f_{002\_hor}$

0     $t_1$   $t_2$     (t/sec)

**Fig. 1**

Aufwärmphase     Prägungsphase     Dauerbetrieb

AM–Grad

$\Delta$ AM–Grad/dt–up < = 15 %/sec, typ. 10 %/sec

40 – 45 %

Bei Vertikal–Betrieb
Segregation

20 – 40 sec

cl_seg –> cl_gemischt

$f_{002\_hor}$ off or on

AM–Grad = 20 – 25 %

20 – 30 %

0     $t_1$     $t_2$   (t/sec)

**Fig. 2**

**FIG. 3**